# FASCICULE DE BREVET EUROPEEN

(11) **EP 2 294 137 B1**
(45) Date de publication et mention de la délivrance du brevet: **15.04.2015**
(21) Numéro de dépôt: 09765784.5
(22) Date de dépôt: 10.06.2009
(51) Int. Cl.: C08L 77/00, C08L 77/06, C08L 97/00, C08L 77/02

(54) **COMPOSITION COMPRENANT UNE MATRICE POLYAMIDE ET DE LA LIGNINE**
ZUSAMMENSETZUNG MIT EINER POLYAMIDMATRIX UND LIGNIN
COMPOSITION CONTAINING A POLYAMIDE MATRIX AND LIGNIN

(30) Priorité: 13.06.2008 FR 0803301
(43) Date de publication de la demande: 16.03.2011
(73) Titulaire: Rhodia Opérations, 93306 Aubervilliers (FR)
(72) Inventeur: ANDRES, Olivier, F-69780 Mions (FR); VERGELATI, Caroll, F-38118 Saint Baudille De La Tour (FR)
(74) Mandataire: Benvenuti, Federica
(86) Numéro de dépôt international: PCT/EP2009/057181
(87) Numéro de publication internationale: WO 2009/153204

(56) Documents cités:
- SANTOS ET AL: "Polyamide-6/vegetal fiber composite prepared by extrusion and injection molding" COMPOSITES PART A: APPLIED SCIENCE AND MANUFACTURING, ELSEVIER SCIENCE PUBLISHERS B.V., AMSTERDAM, NL, vol. 38, no. 12, 28 novembre 2007 (2007-11-28), pages 2404-2411, XP022369116 ISSN: 1359-835X
- POUTEAU C ET AL: "Lignin-polymer blends: evaluation of compatibility by image analysis" COMPTES RENDUS - BIOLOGIES, ELSEVIER, PARIS, FR, vol. 327, no. 9-10, 1 septembre 2004 (2004-09-01), pages 935-943, XP004618007 ISSN: 1631-0691
- R. DWEIRI, C. H. AZHARI: "Thermal and flow property-morphology relationship of sugarcane bagasse fiber-filled polyamide 6 blends" JOURNAL OF APPLIED POLYMER SCIENCE, [Online] vol. 92, no. 6, 5 avril 2004 (2004-04-05), pages 3744-3754, XP002507557 ISSN: 1097-4628 Extrait de l'Internet: URL:http://www3.interscience.wiley.com/cgi -bin/fulltext/107643110/HTMLSTART> [extrait le 2008-12-09]
- HANSJÖRG NITZ, HINNERK SEMKE, ROLF MÜLHAUPT: "Influence of Lignin Type on the Mechanical Properties of Lignin Based Compounds" MACROMOLECULAR MATERIALS AND ENGINEERING, [Online] vol. 286, no. 12, 18 décembre 2001 (2001-12-18), pages 737-743, XP002507558 Weinheim, Germany Extrait de l'Internet: URL:http://www3.interscience.wiley.com/jou rnal/89010962/abstract> [extrait le 2008-12-09]
- D. FELDMAN, D. BANU, A. EL-AGHOURY: "Plasticization effect of lignin in some highly filled vinyl formulations" JOURNAL OF VINYL AND ADDITIVE TECHNOLOGY, [Online] vol. 13, no. 1, 8 février 2007 (2007-02-08), pages 14-21, XP002507691 Extrait de l'Internet: URL:http://dx.doi.org/10.1002/vnl.20098> [extrait le 2008-12-11]

## Description

La présente invention concerne l'utilisation de lignines pour diminuer la reprise en eau de compositions polyamides. L'invention concerne aussi une composition polyamide comprenant de la lignine et son utilisation pour la fabrication d'articles plastiques, notamment par moulage par injection.

### INVENTION

L'article de Santos et al., « Polyamide-6/vegetal fiber composite prepared by extrusion and injection molding" Composites Part A: Applied Science And Manufacturing, Elsevier Science Publishers B.V., Amsterdam, NI, vol. 38, no. 12, 28 novembre 2007 (2007-11-28), pages 2404-2411, décrit un matériau composite PA6/fibres végétales préparé par extrusion et/ou injection.

L'article de Pouteau et al., "Lignin-polymer blends: évaluation of compatibility by image analysis" Comptes Rendus - Biologies, Elsevier, Paris, Fr, vol. 327, no. 9-10, 1 septembre 2004 (2004-09-01), pages 935-943, concerne l'évalation de la compatibilité de mélanges de polymères à base de lignines.

L'article de Dweiri et Azhari, "Thermal and flow property-morphology relationship of sugarcane bagasse fiber-filled polyamide 6 blends" Journal Of Applied Polymer Science, [Online] vol. 92, no. 6, 5 avril 2004 (2004-04-05), pages 3744-3754, porte sur des analyse thermique et de fluidités de mélanges de PA6 et de fibres de canne à sucre.

L'article de Nitz, Semke et Mülhaupt, "Influence of Lignin Type on the Mechanical Properties of Lignin Based Compounds" Macromolecular Materials And Engineering, [Online] vol. 286, no. 12, 18 décembre 2001 (2001-12-18), pages 737-743, est une etude sur l'influence du type de lignine sur les propriétés mécaniques de composes à base de lignine.

La demanderesse a découvert de manière tout a fait surprenante que l'utilisation de lignine dans des compositions à base de polyamide permettait de diminuer la reprise en eau desdites compositions permettant ainsi d'accroitre leur stabilité dimensionnelle sans détériorer leurs propriétés mécaniques. Un niveau optimum de compromis entre la stabilité dimensionnelle et les propriétés mécaniques est notamment obtenu lorsque la composition polyamide comprend de 1 à 15 % en poids de lignine, par rapport au poids total de la composition.

Il apparaitrait en effet que la lignine agirait comme un composé anti plastifiant du polyamide. Les fonctions chimiques de la lignine porteuses de groupements hydroxyles (phénols, alcools primaires, alcools secondaires) se substituent partiellement aux interactions préexistantes entre les groupements carboxylamides du polyamide pour constituer un réseau de liaisons hydrogènes interchaînes beaucoup plus stable que le précédent, qui a la vertu de rigidifier la phase amorphe du polymère en accroissant les performances des propriétés thermo-mécaniques ; tout en inhibant de manière plus efficace l'absorption des molécules d'eau au sein de la matrice.

Par ailleurs, la lignine conduit a une augmentation de la fluidifié de la matrice polyamide en fondu, par rapport à une composition polyamide ne présentant pas de lignine.

La présente invention concerne ainsi une composition comprenant au moins une matrice polyamide et de la lignine. L'invention concerne aussi l'utilisation de lignine dans une composition polyamide pour diminuer la reprise en eau de ladite composition. L'invention concerne également l'utilisation de lignine dans une composition polyamide pour augmenter le fluidité en fondue de ladite composition.

On observe notamment une diminution de la reprise en eau comprise entre 5 et 20 % d'une composition polyamide comprenant de 4 à 15 % en poids de lignine, par rapport au poids total de la composition.

La composition polyamide selon l'invention comprend comme matrice principale un polyamide.

Comme polyamides utilisables selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Le polyamide peut être choisi dans le groupe comprenant le polyamide 6, le polyamide 66, le polyamide 6.10, le polyamide 11, le polyamide 12, le polyamide 6.12, le polymétaxylylènediamine (MXD6), le polyamide 66/6T, le polyamide 66/6I, les mélanges et copolyamides, tels que le copolyamide 6.66 par exemple.

La composition de l'invention peut également comprendre les copolyamides dérivés notamment des polyamides ci-dessus, ou les mélanges de ces polyamides ou copolyamides.

On préfère notamment une matrice polyamide comprenant des polyamides de type 66 et/ou des polyamides de type 6.

Un polyamide de type 66 est un polyamide obtenu au moins à partir d'acide adipique et d'hexaméthylène diamine, pouvant éventuellement comprendre d'autres monomères de polyamide. On entend notamment par polyamide de type 66, un polyamide comprenant au moins 80 % en moles, préférentiellement au moins 90 % en moles de résidus de monomères d'acide adipique et d'hexaméthylène diamine.

Un polyamide de type 6 est un polyamide obtenu au moins à partir de caprolactame, pouvant éventuellement comprendre d'autres monomères de polyamide. On entend notamment par polyamide de type 6, un polyamide comprenant au moins 80 % en moles, préférentiellement au moins 90 % en moles de résidus de monomères de caprolactame.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, par exemple d'indice de viscosité IV compris entre 100 et 160 ml/g, selon la norme ISO 307 ; bien que l'on puisse utiliser aussi des polyamides de plus faible viscosité.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention comprend notamment de 10 à 90 % en poids de polyamide, préférentiellement de 40 à 80 % en poids de polyamide, par rapport au poids total de la composition.

La lignine est un des principaux composants des matières végétales, avec la cellulose. La lignine est un groupe de composés polymériques phénoliques issus de trois types de monomères différents : l'alcool coniférylique, l'alcool p-coumarylique et l'alcool sinapylique. Il existe ainsi de nombreux polymères possibles répondant au nom de lignine.

On utilise préférentiellement de la lignine extraite. La technique d'extraction de la lignine permet de séparer sélectivement la lignine sur la base de propriétés chimiques ou physiques, notamment en utilisant un ou plusieurs solvants. On peut classiquement distinguer trois grands procédés d'extraction de lignine entrant dans le cadre de la fabrication de la pâte à papier. Le procédé industriel Kraft utilisant de l'hydroxyde de sodium et du sulfure de sodium est le plus répandu, le mieux maîtrisé et le moins coûteux. Le procédé Alcell ou Organosolv utilisant un mélange de solvant dont notamment l'éthanol, et dans des conditions acides conduit à des lignines à haut indice de pureté, à bas poids moléculaire et à fort taux de fonctions phénol. Le procédé CIMV (Compagnie Industrielle de la Matière Végétale) s'apparente à un raffinage végétal au sens pétrolier du terme : c'est une technologie qui permet la séparation séquencée des bio polymères tels que la cellulose, la lignine et l'hémicellulose, fonctionnant à pression atmosphérique en milieu organique à hydratation contrôlée.

Il apparait que ce soit la présence des fonctions hydroxyles des lignines issus des trois types de monomères différents (alcool coniférylique, alcool p-coumarylique et alcool sinapylique) qui induisent les effets remarquables sur le polyamide mentionnés précédemment, quelles que soient les typologies de lignine utilisée.

La composition polyamide selon l'invention peut comprendre un ou plusieurs types de lignine.

On préfère notamment les lignines présentant un poids moléculaire moyen compris entre 500 et 1000 g.mol⁻¹.

On préfère notamment utiliser des lignines présentant un rapport molaire de fonction de type hydroxyle compris entre 0,05 et 0,35, préférentiellement compris entre 0,05 et 0,2, par rapport aux fonctions carboxylamides du polyamide. On entend par fonction de type hydroxyle des lignines les fonctions hydroxyles des motifs phénols, alcools primaires et alcools secondaires.

Il est possible d'analyser les lignines par des techniques de chromatographie sur gel perméable pour déterminer la répartition statistique des masses. Il est également possible de procéder à une spectroscopie de masse à photo ionisation à pression atmosphérique (APPI-MS) couplée à une RMN ¹³C Solide à polarisation croisée / rotation angle magique (CP/MAS) pour déterminer de manière plus précise la structure chimique des lignines.

La composition polyamide selon l'invention comprenant de la lignine est notamment utilisée en tant que matrice, notamment pour l'obtention d'articles moulés.

Pour améliorer les propriétés mécaniques d'une composition polyamide selon l'invention, il peut être avantageux de lui adjoindre au moins une charge de renfort et/ou de remplissage préférentiellement choisie dans le groupe comprenant les charges fibreuses telles que les fibres de verre, les fibres de carbone et les fibres aramides, les charges minérales non fibreuses telles que les argiles, le kaolin, la wollastonite, la silice, le talc ou des nanoparticules. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 30 et 60 %.

La composition polyamide peut en outre comprendre un ou plusieurs autres polymères, de préférence des polymères thermoplastiques tels que le polyamide, les polyoléfines, l'ABS ou le polyester.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agent d'amélioration de la résilience comme des élastomères éventuellement greffés, les stabilisants lumière et/ou thermique, les antioxydants, les antistatiques les colorants, les pigments, les matifiants, les agents conducteurs, tels que le noir de carbone, les additifs d'aide au moulage ou autres additifs conventionnels.

Pour la réalisation d'une composition polyamide, ces charges et additifs peuvent être ajoutés au polyamide par des moyens usuels adaptés à chaque charge ou additif, tels que par exemple lors de la polymérisation ou en mélange en fondu. La lignine est préférentiellement ajoutée au polyamide par voie fondue, notamment lors d'une étape d'extrusion du polyamide, ou par voie solide dans un mélangeur mécanique ; le mélange solide pouvant ensuite être mis en fusion, par exemple par un procédé d'extrusion.

La lignine se présente généralement sous forme de poudre. On applique généralement un cycle de conditionnement aux lignine similaire identique à celui du polyamide auquel on les mélange, par exemple au niveau de la température et de l'humidité.

La composition polyamide comprenant la lignine peut également être utilisée, en tant qu'additif, notamment pour conférer certaines propriétés, notamment rhéologiques, dans des compositions comprenant en tant que matrice un polymère thermoplastique, notamment un (co)polyamide. L'invention concerne ainsi un procédé de fabrication d'une composition dans lequel on mélange à froid ou en fondu une composition polyamide comprenant de la lignine avec une composition thermoplastique, notamment à base de (co)polyamide. Le mélange à froid peut ensuite être mis en fusion, par exemple par un procédé d'extrusion.

La composition polyamide comprenant la lignine peut également comprendre une forte proportion d'additifs et être par exemple utilisée comme mélange maître (masterbatch) destiné à être mélange à une autre composition thermoplastique, notamment à base de polyamide.

Les compositions selon l'invention peuvent être utilisées comme matière première dans le domaine des plastiques techniques, par exemple pour la réalisation d'articles mis en forme par moulage par injection, par injection/soufflage, par extrusion ou par extrusion soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

On peut citer par exemple comme articles obtenu à partir de la composition selon l'invention les articles du domaine de l'automobile, telles que les pièces sous capot, les pièces de carrosseries, les tubes et réservoirs ou les articles du domaine de l'électrique et de l'électronique, tels que des connecteurs.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1 :

Des compositions à base de polyamide (PA 66 A2700 de la société Rhodia, ayant un IV de 138 ml/g selon la norme ISO 307) sont obtenues par extrusion sur une mini extrudeuse double-vis PRISM 25D, en ajoutant des quantités variables de lignines issus du procédé Organosolv.

Les caractéristiques de la mise en oeuvre sont les suivantes :
Mini Extrudeuse double vis : PRISM 25D , avec
   - un profil de température : 270 - 275 - 275 - 275 - 275°C
   - vitesse de vis (rpm): 250
   - force moteur (N.m) : 16
   - vide : - 0,3 bar

Des éprouvettes sont réalisées par moulage par injection de la manière suivante : Mini Presse BOY 12M, 12 tonnes, vis de 18 mm
T (°C) fourreau: de 270 à 285
T (°C) moule : 70
Vitesse d'injection (m/s) : 100
Pression d'injection (bar) : 50
Pression de maintien (bar) : 25
Contre pression (bar) : 3
Vitesse de vis (rpm) : 220

Différentes propriétés sont mesurées et mentionnées dans le Tableau 1 :

**Tableau 1**

| | **Echantillon** | **C1** | **1** |
|---|---|---|---|
| | Proportion de Lignine (% w) | 0,0 | 4,0 |
| **Reprise en Eau** | Absorption d'eau à 23°C & HR50 (% w) | 3,26 | 3,01 |
| | Inhibition équivalente (%) | ----- | 7,6 |
| **Propriétés mécaniques «à sec»** | Module d'Young (MPa) | 2827 | 2850 |
| | Contrainte Seuil (MPa) | 75,7 | 76,7 |
| | Déformation (%) | 4,1 | 4,0 |
| **Propriétés mécaniques après conditionnement HR50** | Module d'Young (MPa) | 948 | 1087 |
| | Contrainte Seuil (MPa) | 45,9 | 46,0 |
| | Déformation (%) | 22,8 | 23,6 |
| **Propriétés rhéologiques** | Viscosité apparente à 100 s⁻¹ et 280°C (Pa.s) | 473 | 295 |
| | Viscosité apparente à 1000 s⁻¹ et 280°C (Pa.s) | 221 | 158 |

Les mesures d'absorption d'eau sont réalisées selon le norme ISO 1110.

Les mesures de traction (Module d'Young, Contrainte Seuil et Déformation) sont réalisées selon la norme ISO 527. Les mesures de rhéométrie capillaire qui donnent accès aux propriétés rhéologiques sont réalisées selon la norme ISO 11443.

Il apparait ainsi que la lignine inhibe de manière effective la reprise en eau du polyamide. Un gain de l'ordre de 7,6% est mesuré pour un taux de lignine additivée de 4% en poids. A taux croissant de lignine à l'intérieur de la matrice polyamide, ce niveau de propriété est augmenté puisqu'on mesure une inhibition de l'ordre de 11% pour un taux de lignine additivée de 8% en poids et une inhibition de l'ordre de 18% pour un taux de lignine additivée de l'ordre de 12% en poids.

La lignine agit comme un anti plastifiant du polyamide. Les fonctions chimiques de la lignine porteuses de groupements hydroxyles (phénols, alcools primaires, alcools secondaires) se substituent partiellement aux interactions préexistantes entre groupement carboxylamides du polyamide pour constituer un réseau de liaisons hydrogènes interchaînes beaucoup plus stable que le précédent, qui a la vertu de rigidifier la phase amorphe du polymère en augmentant le niveau des propriétés thermo-mécaniques ; tout en inhibant de manière plus efficace l'absorption des molécules d'eau au sein de la matrice.

L'augmentation de la rigidité de la matrice polyamide induite par la présence de la lignine se traduit par une légère augmentation du Module d'Young « à sec » comme après conditionnement à HR50, alors que l'ensemble des autres propriétés en traction (contrainte seuil et déformation) n'est pas altéré « à sec » et même en augmentation légère après conditionnement à HR50.

On observe aussi que la présence de la lignine est vectrice d'un effet de fluidification de la matrice polyamide en fondu. La courbe de rhéométrie capillaire représentant la viscosité apparente du fondu du mélange lignine / polyamide en fonction de son gradient de cisaillement est systématiquement située en deçà de celle de la référence polyamide.

## Revendications

1. Composition comprenant au moins une matrice polyamide et de la lignine extraite ; la matrice polyamide comprend des polyamides de type 66 et/ou des polyamides de type 6.

2. Composition selon la revendication 1, **caractérisée en ce que** la composition comprend de 10 à 90 % en poids de polyamide, par rapport au poids total de la composition.

3. Composition selon l'une quelconque des revendications 1 à 2, **caractérisée en ce que** la composition comprend de 40 à 80 % en poids de polyamide, par rapport au poids total de la composition.

4. Composition selon l'une quelconque des revendications 1 à 3, **caractérisée en ce que** la composition comprend un ou plusieurs types de lignine.

5. Composition selon l'une quelconque des revendications 1 à 4, **caractérisée en ce que** la composition comprend de 1 à 15 % en poids de lignine, par rapport au poids total de la composition.

6. Composition selon l'une quelconque des revendications 1 à 5, **caractérisée en ce que** la lignine présente un rapport molaire de fonction de type hydroxyle compris entre 0,05 et 0,35, par rapport aux fonctions carboxylamides du polyamide.

7. Composition selon l'une quelconque des revendications 1 à 6, **caractérisée en ce que** la composition comprend des charges de renfort ou de remplissages.

8. Procédé de fabrication d'une composition selon l'une quelconque des revendications précédentes, dans lequel on mélange de la lignine au polyamide par voie fondue ou par voie solide.

9. Article obtenu par mise en forme d'une composition selon l'une quelconque des revendications précédentes par moulage par injection, par injection/soufflage, par extrusion ou par extrusion soufflage.

10. Utilisation de lignine dans une composition polyamide pour diminuer la reprise en eau de ladite composition.

11. Utilisation de lignine dans une composition polyamide pour augmenter la fluidité en fondue de ladite composition.

## Patentansprüche

1. Zusammensetzung, umfassend mindestens eine Polyamidmatrix und extrahiertes Lignin; die Polyamidmatrix umfasst Polyamide vom Typ 66 und/oder Polyamide vom Typ 6.

2. Zusammensetzung nach Anspruch 1, **dadurch gekennzeichnet, dass** die Zusammensetzung 10 bis 90 Gew.-% Polyamid, bezogen auf das Gesamtgewicht der Zusammensetzung, umfasst.

3. Zusammensetzung nach einem der Ansprüche 1 bis 2, **dadurch gekennzeichnet, dass** die Zusammensetzung 40 bis 80 Gew.-% Polyamid, bezogen auf das Gesamtgewicht der Zusammensetzung, umfasst.

4. Zusammensetzung nach einem der Ansprüche 1 bis 3, **dadurch gekennzeichnet, dass** die Zusammensetzung einen oder mehrere Typen von Lignin umfasst.

5. Zusammensetzung nach einem der Ansprüche 1 bis 4, **dadurch gekennzeichnet, dass** die Zusammensetzung 1 bis 15 Gew.-% Lignin, bezogen auf das Gesamtgewicht der Zusammensetzung, umfasst.

6. Zusammensetzung nach einem der Ansprüche 1 bis 5, **dadurch gekennzeichnet, dass** das Lignin ein Molverhältnis von Hydroxylfunktionen zwischen 0,05 und 0,35, bezogen auf die Carboxylamidfunktionen des Polyamids, aufweist.

7. Zusammensetzung nach einem der Ansprüche 1 bis 6, **dadurch gekennzeichnet, dass** die Zusammensetzung verstärkende oder streckende Füllstoffe umfasst.

8. Verfahren zur Herstellung einer Zusammensetzung nach einem der vorhergehenden Ansprüche, bei dem man das Lignin in der Schmelze oder in festem Zustand mit dem Polyamid mischt.

9. Artikel, erhalten durch Formen einer Zusammensetzung nach einem der vorhergehenden Ansprüche durch Spritzguss, durch Spritzblasformen, durch Extrusion oder durch Extrusionsblasformen.

10. Verwendung von Lignin in einer Polyamidzusammensetzung zur Verringerung der Wasseraufnahme der Zusammensetzung.

11. Verwendung von Lignin in einer Polyamidzusammensetzung zur Erhöhung der Schmelzefließfähigkeit der Zusammensetzung.

## Claims

1. Composition comprising at least one polyamide matrix and extracted lignin; the polyamide matrix comprises type 66 polyamides and/or type 6 polyamides.

2. Composition according to Claim 1, **characterized in that** the composition comprises from 10% to 90% by weight of polyamide, relative to the total weight of the composition.

3. Composition according to either one of Claims 1 and 2, **characterized in that** the composition comprises from 40% to 80% by weight of polyamide, relative to the total weight of the composition.

4. Composition according to any one of Claims 1 to 3, **characterized in that** the composition comprises one or more types of lignin.

5. Composition according to any one of Claims 1 to 4, **characterized in that** the composition comprises from 1% to 15% by weight of lignin, relative to the total weight of the composition.

6. Composition according to any one of Claims 1 to 5, **characterized in that** the lignin has a molar ratio of hydroxyl functions, relative to the carboxylamide functions of the polyamide, of between 0.05 and 0.35.

7. Composition according to any one of Claims 1 to 6, **characterized in that** the composition comprises reinforcing or bulking fillers.

8. Process for manufacturing a composition according to any one of the preceding claims, in which lignin is mixed with the polyamide in a melt process or in a solid process.

9. Formed article obtained from a composition according to any one of the preceding claims, by injection-molding, by injection/blow-molding, by extrusion or by extrusion/blow-molding.

10. Use of lignin in a polyamide composition, for reducing the water uptake of said composition.

11. Use of lignin in a polyamide composition, for increasing the melt flow index of said composition.
